# FASCICULE DE BREVET EUROPEEN

(11) **EP 4 286 019 B1**
(45) Date de publication et mention de la délivrance du brevet: **19.03.2025**
(21) Numéro de dépôt: 23174856.7
(22) Date de dépôt: 23.05.2023
(51) Int. Cl.: A62C 3/08

(54) **AÉRONEF COMPORTANT UNE CANALISATION DE TRANSPORT DE DIHYDROGÈNE, UN CANAL D'ENFOUISSEMENT DE LADITE CANALISATION DE TRANSPORT ET UN SYSTÈME D'AÉRATION DUDIT CANAL D'ENFOUISSEMENT**
FLUGZEUG MIT EINER DIWASSERSTOFFTRANSPORTLEITUNG, EINEM EINGRABENKANAL DIESER TRANSPORTLEITUNG UND EINEM BELÜFTUNGSSYSTEM DES EINGRABENKANALS
AIRCRAFT COMPRISING A DIHYDROGEN TRANSPORT DUCT, A DUCT FOR BURYING SAID TRANSPORT DUCT AND A SYSTEM FOR VENTILATING SAID BURIAL CHANNEL

(30) Priorité: 31.05.2022 FR 2205188
(43) Date de publication de la demande: 06.12.2023
(73) Titulaire: AIRBUS OPERATIONS, 31060 Toulouse Cedex 9 (FR)
(72) Inventeur: CASTERAN, Marc, 31770 COLOMIERS (FR); JOUBERT, Romain, 31060 TOULOUSE (FR); MILLIERE, Jérôme, 31060 TOULOUSE (FR)
(74) Mandataire: Cabinet Le Guen Maillet

(56) Documents cités:
- EP-A1- 3 012 189
- US-A1- 2014 023 479
- US-A1- 2021 078 702

## Description

### DOMAINE TECHNIQUE

La présente invention se rapporte au domaine des aéronefs et, en particulier, des aéronefs dont la source d'énergie est du dihydrogène liquide ou gazeux que ce soit pour alimenter une pile à combustible ou directement la chambre de combustion d'un moteur. La présente invention concerne ainsi un aéronef comportant une canalisation de transport de dihydrogène, un canal d'enfouissement qui permet le passage de la canalisation de transport et un système d'aération du canal d'enfouissement.

### ÉTAT DE LA TECHNIQUE ANTÉRIEURE

Il est connu d'utiliser le dihydrogène comme source d'énergie dans un aéronef. Le dihydrogène est stocké dans un réservoir et une canalisation de transport assure le transport du dihydrogène du réservoir vers le dispositif consommateur, comme par exemple une pile à combustible ou la chambre de combustion d'un moteur.

En cas de fuite de dihydrogène le long de cette canalisation de transport, et pour éviter la création d'un mélange inflammable autour de la zone de fuite, il est nécessaire de prévoir des dispositifs dédiés.

Il est ainsi possible de supprimer la présence du comburant (l'oxygène contenu dans l'air ambiant) nécessaire à l'ignition et de le remplacer par un gaz inerte.

Il est également possible de ventiler la zone de fuite afin de limiter la proportion de dihydrogène dans le mélange et ainsi rester en dessous du seuil d'inflammabilité.

Lorsque la canalisation de transport est longue, la mise en place de tels dispositifs engendre de fortes pénalités au niveau de l'aéronef en termes de masse, de coût, de consommation d'énergie, de contraintes d'intégration physique et nécessite de prévoir des systèmes de surveillance en temps réel du bon fonctionnement de chacun des dispositifs.

Le document US2021078702 divulgue un aéronef comportant des haubans de support pour les ailes dans lesquels sont disposés des tuyaux d'hydrogène ou des conducteurs électriques.

### EXPOSÉ DE L'INVENTION

Un objet de la présente invention est de proposer un aéronef comportant une canalisation de transport de dihydrogène, un canal d'enfouissement qui permet le passage de la canalisation de transport et un système d'aération du canal d'enfouissement qui assure une ventilation du canal d'enfouissement en particulier en cas de fuite de dihydrogène pendant les phases de fonctionnement de l'aéronef.

À cet effet, est proposé un aéronef comportant :
- au moins une canalisation de transport dans laquelle s'écoule du dihydrogène,
- pour chaque canalisation de transport, un canal d'enfouissement comportant un caniveau qui comporte un fond, une ouverture à l'opposé du fond, et un plancher intermédiaire ajouré entre le fond et l'ouverture et séparant le caniveau en un caniveau supérieur dans lequel est fixée la canalisation de transport et un caniveau inférieur,
- un système d'aération comportant une bouche d'aération arrangée pour capter de l'air extérieur à l'aéronef et au moins une canalisation d'apport où chacune débouche au niveau de ladite entrée d'air par une fenêtre,
- des moyens de détection répartis dans chaque canal d'enfouissement arrangés pour détecter la présence de dihydrogène,
- pour un ou plusieurs caniveaux inférieurs, une boîte de dérivation comportant :
- pour le ou chacun desdits caniveaux inférieurs, une entrée fluidiquement connectée à la canalisation d'apport et une sortie fluidiquement connectée audit caniveau inférieur, où l'entrée et la sortie sont fluidiquement connectées entre elles par une conduite, où l'entrée est différente pour chaque caniveau inférieur,
- entre chaque entrée et sortie associées, une porte mobile alternativement entre une position ouverte où l'air est libre de circuler entre l'entrée et la sortie et une position fermée dans laquelle l'air est bloqué entre l'entrée et la sortie, et
- pour chaque porte, un système de manœuvre commandé par l'unité de contrôle et arrangé pour déplacer ladite porte alternativement de la position ouverte à la position fermée, et
- une unité de contrôle arrangée pour recevoir des informations des moyens de détection et commander chaque système de manœuvre en fonction desdites informations.

Avec un tel arrangement, en cas de fuite de dihydrogène dans un canal d'enfouissement, le dihydrogène est dilué automatiquement.

Avantageusement, chaque porte est montée mobile en rotation autour d'un arbre vertical central par rapport à la porte et par rapport à l'entrée, le système de manœuvre est un moteur électrique dont l'arbre moteur est arrangé pour entraîner en rotation l'arbre de la porte. Avantageusement, la boîte de dérivation présente un logement séparé des conduites par un plancher de séparation, le logement est en communication fluidique avec les caniveaux supérieurs des caniveaux connectés à ladite boîte de dérivation et le plancher de séparation est percé d'au moins un trou fluidiquement connecté entre au moins l'une des conduites et le logement.

Avantageusement, la bouche d'aération comporte une trappe qui est montée mobile entre une position fermée dans laquelle elle isole chaque fenêtre de l'air extérieur et une position ouverte dans laquelle elle s'escamote pour laisser libre le passage de l'air extérieur vers chaque fenêtre, et ledit aéronef comporte un système de déplacement commandé par l'unité de contrôle et arrangé pour déplacer la trappe alternativement de la position ouverte à la position fermée.

Avantageusement, la trappe est montée mobile en rotation au niveau d'une partie avant, le système de déplacement comporte un socle, un coulisseau monté coulissant sur le socle, une biellette dont une première extrémité est fixée de manière articulée au coulisseau et dont une deuxième extrémité est fixée de manière articulée à la trappe et un actionneur commandé par l'unité de contrôle et arrangé pour déplacer le coulisseau le long du socle. Avantageusement, des ventilateurs commandés par l'unité de contrôle sont implantés dans une ou plusieurs des canalisations d'apport.

Avantageusement, des moyens de chauffage commandés par l'unité de contrôle sont implantés dans une ou plusieurs des canalisations d'apport.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de dessus d'un aéronef selon l'invention,
[Fig. 2] est une vue en coupe du fuselage de l'aéronef de la Fig. 1 selon la ligne II-II,
[Fig. 3] est une vue en coupe d'une aile de l'aéronef de la Fig. 1 selon la ligne III-III,
[Fig. 4] est un agrandissement du caisson de voilure de la Fig. 3,
[Fig. 5] est une vue en perspective d'un canal d'enfouissement selon l'invention,
[Fig. 6] est une vue en perspective de canaux d'enfouissement et d'un système d'aération selon l'invention,
[Fig. 7] est une vue de côté et en coupe d'une bouche d'aération du système d'aération selon l'invention en position fermée,
[Fig. 8] est une vue similaire à la Fig. 7 en position ouverte,
[Fig. 9] est une vue de dessus et en coupe d'une boîte de dérivation du système d'aération selon l'invention, et
[Fig. 10] est une vue de détail et en perspective d'une boîte de dérivation du système d'aération selon l'invention.

### EXPOSÉ DÉTAILLÉ DE MODES DE RÉALISATION

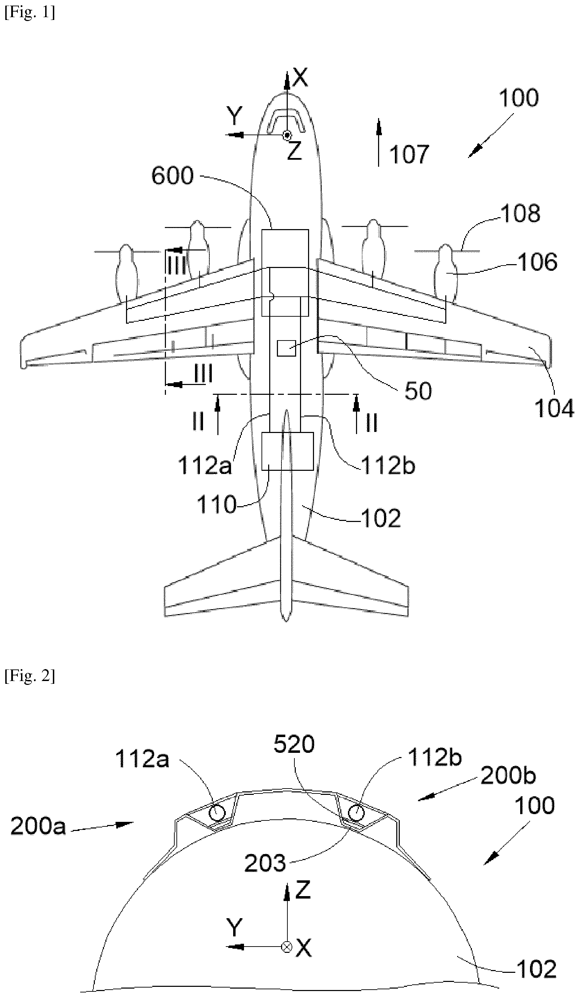

La Fig. 1 montre un aéronef 100 qui présente un fuselage 102 de part et d'autre duquel est fixée une aile 104. Sous chaque aile 104 est fixé au moins un système de propulsion 106.

Par convention, on appelle X la direction longitudinale de l'aéronef 100, Y la direction transversale de l'aéronef 100 qui est horizontale lorsque l'aéronef est au sol, et Z la direction verticale ou hauteur verticale lorsque l'aéronef est au sol, ces trois directions X, Y et Z étant orthogonales entre elles.

D'autre part, les termes " avant " et " arrière " sont à considérer par rapport à une direction d'avancement de l'aéronef 100 lors du fonctionnement des systèmes de propulsion 106, cette direction étant représentée schématiquement par la flèche 107.

Dans le mode de réalisation de l'invention présenté ici, chaque système de propulsion 106 comprend un moteur électrique, une hélice 108 montée sur l'arbre moteur dudit moteur électrique et une pile à combustible qui alimente le moteur en électricité.

La pile à combustible est alimentée en oxygène et en dihydrogène afin de produire de l'électricité.

Dans un autre mode de réalisation, le système de propulsion 106 peut prendre la forme d'un turboréacteur dont le carburant qui est brûlé dans la chambre de combustion est du dihydrogène.

L'aéronef 100 comporte également un réservoir de dihydrogène 110 qui est disposé ici dans une partie arrière du fuselage, mais qui pourrait être disposé dans une autre partie de l'aéronef 100. Le dihydrogène peut être liquide ou gazeux.

Pour transporter le dihydrogène, l'aéronef 100 comporte au moins une canalisation de transport 112a-b dans laquelle s'écoule le dihydrogène. Pour des raisons de facilité de mise en œuvre, les canalisations de transport 112a-b sont préférentiellement disposées en partie haute de l'aéronef 100 et s'étendent ainsi le long du fuselage 102 et des ailes 104 en partie haute de ceux-ci.

Dans le mode de réalisation de l'invention présenté à la Fig. 1, il y a une canalisation de transport 112a qui s'étend entre le réservoir 110 et un dispositif consommateur (la pile à combustible, le turboréacteur) qui consomme le dihydrogène et qui assure le transport du dihydrogène du réservoir 110 vers le dispositif consommateur, et il y a une canalisation de transport 112b qui s'étend entre le dispositif consommateur et le réservoir 110 et qui assure le transport du dihydrogène du dispositif consommateur vers le réservoir 110 par exemple dans le cas où le dispositif consommateur n'a pas consommé tout le dihydrogène fourni. Mais il est également possible de prévoir que les deux canalisations de transport constituent deux lignes d'alimentation en parallèle qui transportent le dihydrogène aux moteurs.

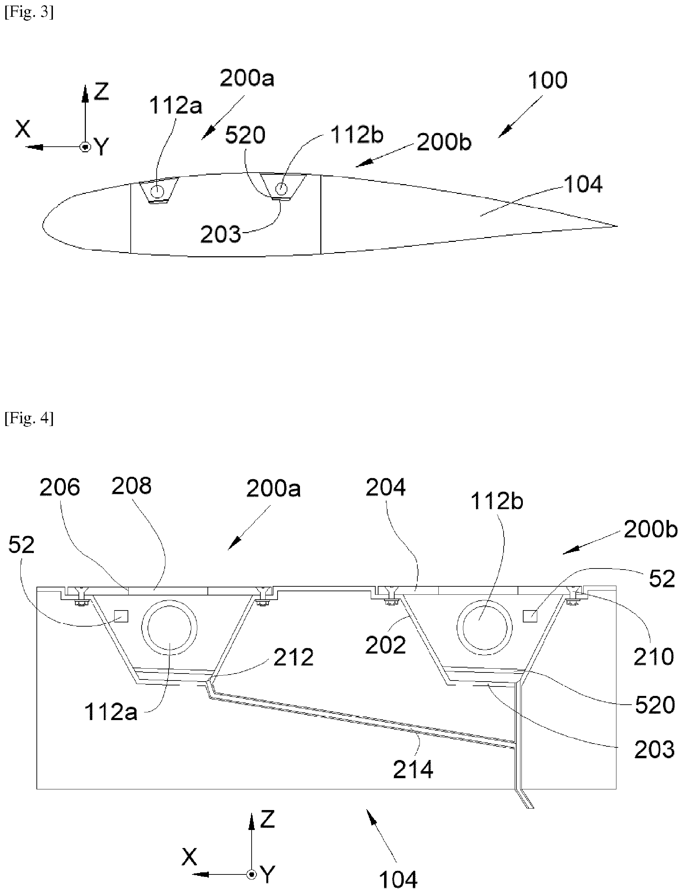

La Fig. 2 montre une coupe du fuselage 102 avec les canalisations de transport 112a-b et la Fig. 3 montre une coupe d'une aile 104 avec les canalisations de transport 112a-b.

Dans le mode de réalisation représenté sur la Fig. 2, les canalisations de transport 112a-b sont logées dans un module fixé à l'extérieur de la peau du fuselage 102, mais elles pourraient être intégrées directement dans le fuselage 102 comme cela est le cas sur la Fig. 3 pour les canalisations de transport 112a-b circulant le long de l'aile 104 et qui sont logées ici dans un caisson de l'aile 104. Mais les canalisations de transport 112a-b pourraient également être logées dans les zones de bords d'attaque ou de bords de fuite car cela serait moins pénalisant en termes d'impact sur la structure du caisson de l'aile 104.

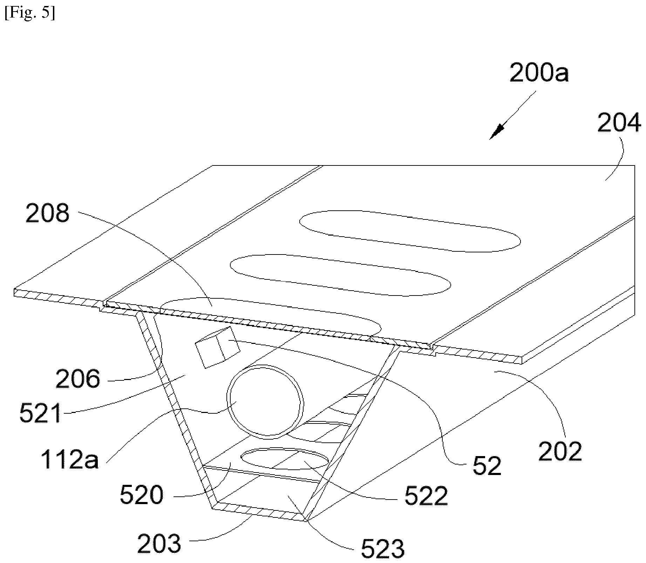

La Fig. 4 montre un agrandissement de la Fig. 3 mais la description qui est faite ci-dessous et qui s'applique à l'aile 104 peut également s'appliquer au fuselage 102 et la Fig. 5 montre une vue en perspective du mode de réalisation de l'invention.

Pour chaque canalisation de transport 112a-b, l'aéronef 100 comporte un canal d'enfouissement 200a-b dans lequel est logée ladite canalisation de transport 112a-b.

Le canal d'enfouissement 200a-b comporte un caniveau 202 qui comporte un fond 203, une ouverture à l'opposé du fond 203, et ici un couvercle 204 qui recouvre l'ouverture du caniveau 202 en l'obturant au moins en partie. La canalisation de transport 112a-b est ainsi logée entre le fond 203 et l'ouverture et ici le couvercle 204. La canalisation de transport 112a-b est fixée au caniveau 202 par tous moyens appropriés comme par exemple des colliers.

Dans le mode de réalisation de l'invention présenté sur les Figs. 2 à 5, le caniveau 202 présente une section trapézoïdale, mais des sections de forme différente sont possibles.

Le couvercle 204 constitue une paroi extérieure de l'aéronef 100, c'est-à-dire qu'elle est en contact direct avec l'air extérieur entourant l'aéronef 100. Le couvercle 204 est fixé à la paroi extérieure de l'aéronef 100 par tous moyens de fixation appropriés, comme par exemple ici des boulons 210.

Le couvercle 204 est percé de fenêtres de ventilation 206 qui permettent le passage du dihydrogène, en particulier en cas de fuite de la canalisation de transport 112a-b, vers l'extérieur, limitant d'autant la concentration de dihydrogène dans le canal d'enfouissement 200a-b et les risques liés à la présence de dihydrogène. Préférentiellement, le couvercle 204 est en position supérieure par rapport au fond 203, c'est-à-dire au-dessus.

Avec un tel arrangement, même en cas de fuite de dihydrogène dans le canal d'enfouissement 200a-b, le dihydrogène s'évacue automatiquement vers l'extérieur et ceci de manière naturelle du fait de la faible densité du dihydrogène gazeux et de la présence des fenêtres de ventilation 206 en partie supérieure dans le couvercle 204, sans qu'il soit nécessaire de mettre des ventilateurs et procure ainsi une installation simple et légère. Ainsi, en cas d'incendie dû à la présence de dihydrogène, le contact direct avec l'air ambiant en mouvement permet de limiter l'extension de l'incendie en soufflant les flammes. En outre, un tel arrangement permet également de confiner les flammes dans le caniveau 202 en cas de déclenchement d'un incendie et ainsi de protéger l'environnement proche.

En outre, le fait de mettre une seule canalisation de transport 112a-b par canal d'enfouissement 200a-b empêche qu'un incendie qui se développe dans un canal d'enfouissement 200a-b du fait d'une fuite de la canalisation de transport 112a-b correspondante dégrade la canalisation de transport 112a-b de l'autre canal d'enfouissement 200a-b.

Pour limiter l'impact des fenêtres de ventilation 206 sur la traînée de l'aéronef 100 en vol, chaque fenêtre de ventilation 206 est fermée par un bouchon 208 réalisé d'un matériau respirant pour le dihydrogène, c'est-à-dire que le bouchon 208 est imperméable pour l'eau extérieure qui ne peut pas pénétrer dans le canal d'enfouissement 200a-b, et perméable, entre autres pour le dihydrogène qui est présent dans le canal d'enfouissement 200a-b et peut s'évacuer vers l'extérieur. Le bouchon 208 est réalisé par exemple en polypropylène ou polyéthylène.

Pour éviter qu'en cas d'incendie, le feu reste confiné dans le canal d'enfouissement 200a-b du fait de la présence des bouchons 208, chaque bouchon 208 est constitué d'un matériau susceptible de rompre sous l'effet de la chaleur, comme par exemple en polypropylène ou polyéthylène. En rompant sous l'effet de la chaleur, le bouchon 208 constitue un fusible qui permet d'ouvrir la fenêtre de ventilation 206 en cas de besoin pour souffler les flammes. En particulier, le matériau pour le bouchon 208 est choisi de manière à rompre lorsque la température à l'intérieur du caniveau 202 atteint une valeur inférieure à la température maximale acceptable par le caniveau 202 et la canalisation de transport 112a-b installée dans le caniveau 202, c'est-à-dire la température à partir de laquelle l'intégrité du caniveau 202 et de la canalisation de transport 112a-b n'est plus garantie.

En cas de surpression, il est également possible de prévoir que le couvercle 204 se rompe sous l'effet de la surpression limitant ainsi les risques de rupture du caniveau 202. À cette fin, la résistance au déchirement du couvercle 204 est inférieure à la résistance au déchirement du caniveau 202, par exemple par la réalisation de zones moins épaisses. Il est également possible de prévoir que la rupture s'effectue au niveau des moyens de fixation du couvercle 204, par exemple en utilisant des boulons fusibles qui rompent au-delà d'une certaine pression.

Au cas où un incendie interviendrait dans le caniveau 202, et afin de limiter les risques de propagation de l'incendie vers l'intérieur de l'aéronef 100, le caniveau 202 est réalisé dans un matériau résistant au feu et plus particulièrement dans un matériau capable de garder ses propriétés mécaniques même en cas d'incendie dans le caniveau 202. Le matériau est par exemple du titane, un alliage de titane ou un matériau comportant une âme non résistante au feu mais recouvert d'une couche de protection résistante au feu comme de la laine de roche ou de la céramique.

Le caniveau 202 comporte au moins un point bas 212 au niveau du fond 203 ce qui permet le drainage de l'eau qui se serait accumulée dans le caniveau 202 vers le/les points bas 212. L'aéronef 100 comporte alors pour chaque point bas 212, une canalisation d'évacuation 214 dont une première extrémité est fluidiquement connectée au caniveau 202 au niveau du point bas 212 et dont une deuxième extrémité débouche vers l'extérieur de l'aéronef 100 et où la canalisation d'évacuation 214 présente une pente descendante entre la première extrémité et la deuxième extrémité pour évacuer par gravité l'eau ainsi récoltée.

Au sol, la canalisation d'évacuation 214 permet d'évacuer l'eau et en vol, la différence de pression entre la première extrémité et la deuxième extrémité permet une aération naturelle supplémentaire du canal d'enfouissement 200a-b à travers les fenêtres de ventilation 206 et les bouchons 208 lorsqu'ils sont présents et qui seront alors préférentiellement respirants. Pour aérer chaque canal d'enfouissement 200a-b, l'aéronef 100 comporte un système d'aération 600 qui est disposé ici au niveau de la partie supérieure de l'aéronef 100 au niveau de la jonction des ailes 104 et qui permet l'introduction de l'air extérieur et l'envoi de cet air dans chaque canal d'enfouissement 200a-b.

Pour éviter que les attaches qui fixent la canalisation de transport 112a-b dans le canal d'enfouissement 200a-b perturbent l'écoulement de l'air provenant du système d'aération 600, le caniveau 202 comporte un plancher intermédiaire 520 entre le fond 203 et l'ouverture. Le plancher intermédiaire 520 est à distance du fond 203 et sépare le caniveau 202 en un caniveau supérieur 521 dans lequel est fixée la canalisation de transport 112a-b et un caniveau inférieur 523 dans lequel circule l'air provenant du système d'aération 600. Le caniveau supérieur 521 s'étend entre le plancher intermédiaire 520 et le couvercle 204, le caniveau inférieur 523 s'étend entre le fond 203 et le plancher intermédiaire 520.

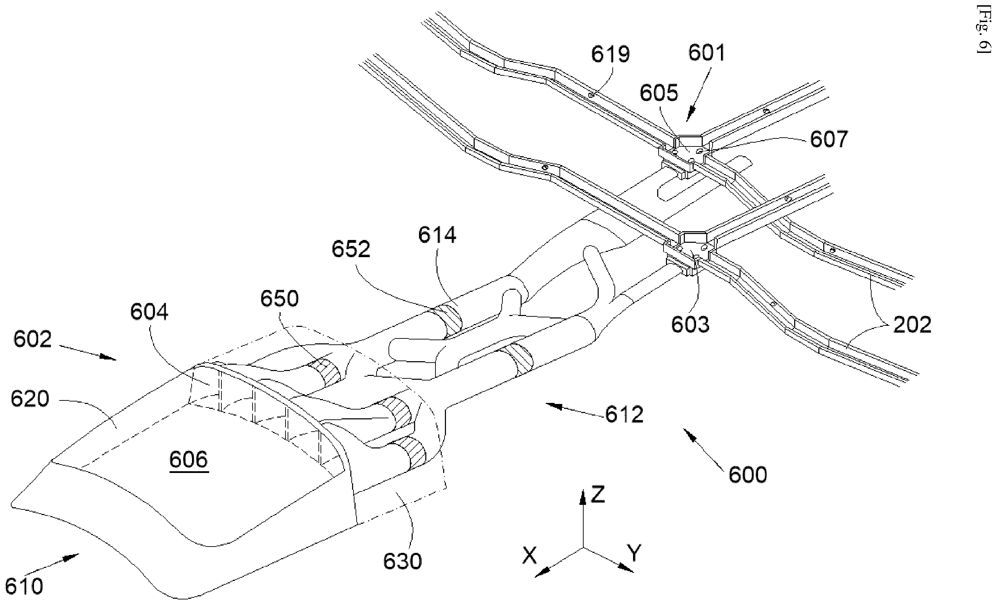

Pour permettre le passage de l'air du caniveau inférieur 523 vers le caniveau supérieur 521, le plancher intermédiaire 520 est ajouré et il est ici percé de trous 522 qui permettent d'assurer une ventilation du caniveau supérieur 521. En particulier, des zones particulières nécessitent d'être particulièrement aérées du fait du nombre d'éléments ou de raccords dans cette zone et il est alors judicieux de disposer ces trous 522 au niveau de ces zones. Une telle zone est par exemple une zone comportant de nombreuses canalisations de transport 112a-b, des coudes... La Fig. 6 montre le système d'aération 600 selon l'invention avec les caniveaux 202 mais sans les canalisations de transport 112a-b qui logent dans lesdits caniveaux 202.

Le système d'aération 600 comporte une bouche d'aération 610 arrangée pour capter de l'air extérieur à l'aéronef 100 et au moins une canalisation d'apport 614 fluidiquement connectée à la bouche d'aération 610.

Dans le mode de réalisation de l'invention présenté à la Fig. 6, il y a une pluralité de canalisations d'apport 614 regroupées dans un réseau d'apport 612, et chaque canalisation d'apport 614 canalise l'air prélevé à l'extérieur au niveau de la bouche d'aération 610 vers un ou des caniveaux inférieurs 523 des caniveaux 202.

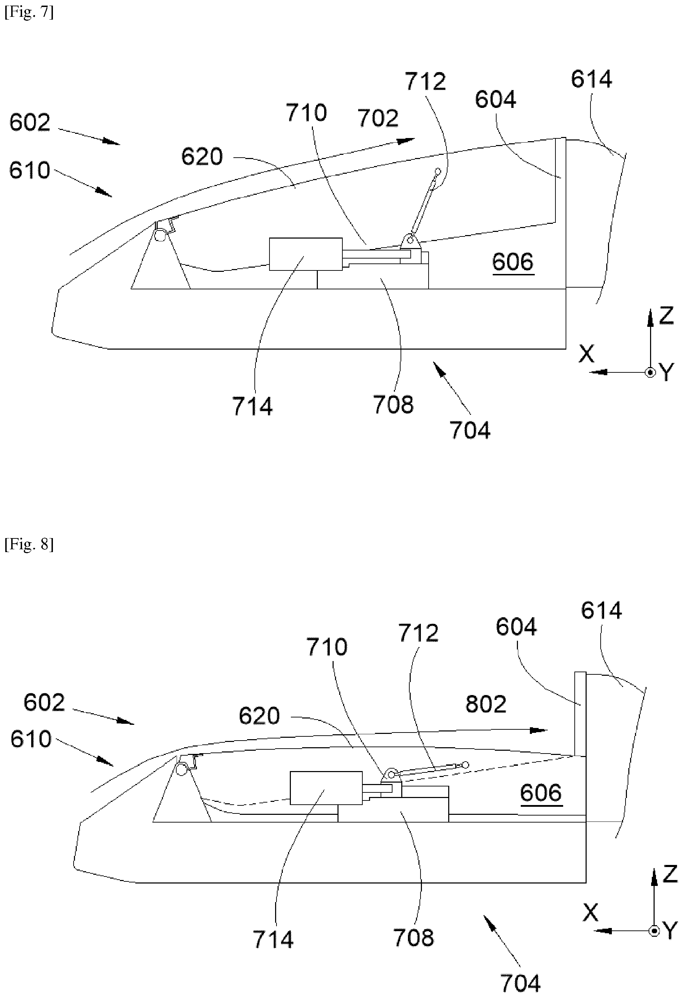

Dans le mode de réalisation de l'invention présenté ici, la bouche d'aération 610 peut prendre alternativement une position fermée en Fig. 7 et une position ouverte en Fig. 8.

Une peau extérieure 630 représentée ici en partie (en traits mixtes), recouvre les caniveaux 202 et le réseau d'apport 612 et constitue le couvercle 204. Cette peau extérieure 630 peut être une peau de l'aéronef 100 ou une peau additionnelle fixée à la peau de l'aéronef 100. Cette peau extérieure 630 assure une surface aérodynamique limitant la consommation énergétique. La bouche d'aération 610 comporte une entrée d'air 602 réalisée dans la peau extérieure 630 et au niveau de laquelle débouche chaque canalisation d'apport 614 par une fenêtre 604 ouverte vers l'avant de l'aéronef 100 afin de capter l'air extérieur lorsque l'aéronef 100 avance ou est à l'arrêt.

Pour un ou plusieurs caniveaux inférieurs 523, l'aéronef 100 comporte une boîte de dérivation 601, c'est-à-dire au niveau de chaque intersection entre une canalisation d'apport 614 et un/des caniveaux inférieurs 523.

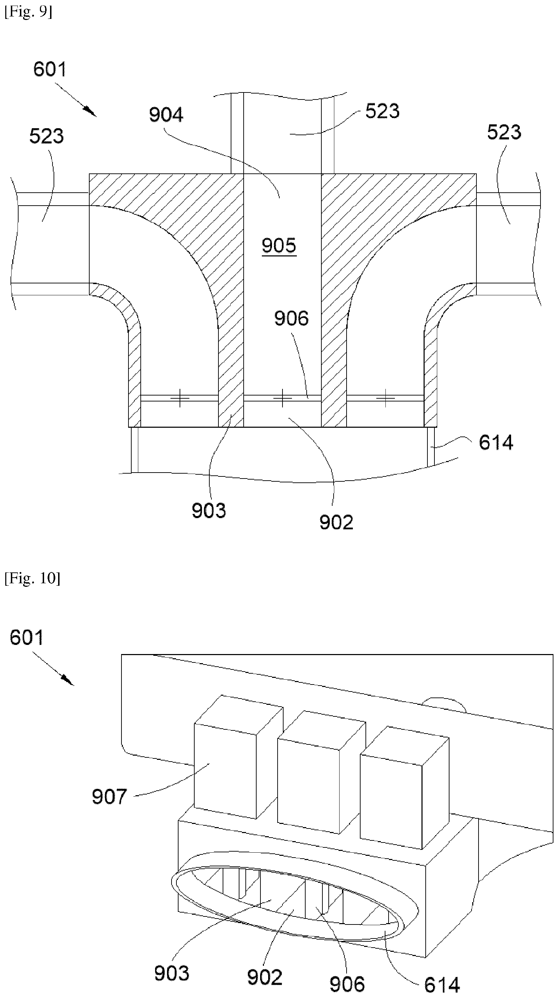

La boîte de dérivation 601 est vue en coupe sur la Fig. 9 en vue extérieure à la Fig. 10 et comporte pour chaque caniveau inférieur 523, une entrée 902 fluidiquement connectée à la canalisation d'apport 614 et une sortie 904 fluidiquement connectée audit caniveau inférieur 523, où l'entrée 902 et la sortie 904 sont fluidiquement connectées entre elles par une conduite 905. L'entrée 902 et la sortie 904 sont différentes pour chaque caniveau inférieur 523 et séparées de l'entrée 902 voisine par un mur 903.

Ainsi, un flux d'air entrant au niveau d'une entrée 902 va se diffuser au niveau de la sortie 904 associée, et pour contrôler le flux d'air s'écoulant au niveau de chaque caniveau inférieur 523, la boîte de dérivation 601 est équipée au niveau de l'entrée 902 associée, d'une porte 906 mobile alternativement entre une position ouverte où l'air est libre de circuler entre l'entrée 902 et la sortie 904 et une position fermée dans laquelle l'air est bloqué entre l'entrée 902 et la sortie 904. Dans le mode de réalisation de l'invention présenté ici, la porte 906 est au niveau de l'entrée 902, mais elle peut être disposée au niveau de la sortie 904 et d'une manière générale, n'importe où entre l'entrée 902 et la sortie 904 associées.

Pour chaque porte 906, la boîte de dérivation 601 comporte un système de manœuvre commandé par une unité de contrôle 50 en fonction des besoins comme expliqué ci-dessous. Le système de manœuvre tel qu'un moteur électrique 907 est arrangé pour déplacer ladite porte 906 alternativement de la position ouverte à la position fermée.

Chaque porte 906 est ici une porte montée mobile en rotation autour d'un arbre vertical central par rapport à la porte 906 et par rapport à l'entrée 902 et l'arbre moteur du moteur 907 associé est ici arrangé pour entraîner en rotation l'arbre de la porte 906.

Dans le mode de réalisation de l'invention présenté ici, il y a trois caniveaux inférieurs 523 par boîte de dérivation 601, mais ce nombre peut varier à partir de un, c'est-à-dire au moins un caniveau inférieur 523 par boîte de dérivation 601.

L'aéronef 100 comporte un ensemble de détection qui comporte une pluralité de moyens de détection 52, comme par exemple des détecteurs de dihydrogène 619, qui sont répartis dans chaque canal d'enfouissement 200a-b et connectés à l'unité de contrôle 50. Chaque moyen de détection 52 est arrangé pour détecter la présence de dihydrogène et il est arrangé pour transmettre, à l'unité de contrôle 50, l'information selon laquelle il a détecté du dihydrogène ou non. En fonction des informations transmises par chaque moyen de détection 52 et reçues par l'unité de contrôle 50, cette dernière va commander chaque système de manœuvre 907 pour ouvrir ou fermer la porte 906 associée.

Selon un mode de fonctionnement particulier, en fonctionnement normal, c'est-à-dire lorsqu'aucune fuite de dihydrogène n'est détectée par l'ensemble de détection, l'unité de contrôle 50 commande le système de manœuvre 907 de chaque porte 906 de manière à ce que ladite porte 906 soit en position ouverte pour avoir une ventilation similaire vers chaque caniveau inférieur 523.

Selon le même mode de fonctionnement particulier, lorsque l'ensemble de détection détecte une fuite de dihydrogène au niveau d'une canalisation de transport 112a-b, et que l'aéronef 100 est au sol, il informe l'unité de contrôle 50 qui commande le système de manœuvre 907 de chaque porte 906 correspondant à un caniveau inférieur 523 qui n'est pas concerné par la fuite de manière à ce que ladite porte 906 soit en position fermée, et commande le système de manœuvre 907 de chaque porte 906 correspondant à un caniveau inférieur 523 concerné par la fuite de manière à ce que ladite porte 906 soit en position ouverte pour maximiser l'aération dans ladite canalisation de transport 112a-b.

Ainsi un tel arrangement permet une gestion efficace du flux d'air en condition normale ou en condition de fuite, et en particulier une dilution rapide du dihydrogène en cas de fuite. Au-dessus des conduites 905, la boîte de dérivation 601 présente un logement 603 qui est séparé des conduites 905 par un plancher de séparation 605. Le logement 603 est en communication fluidique avec les caniveaux supérieurs 521 des caniveaux 202 qui sont connectés à ladite boîte de dérivation 601 par leurs caniveaux inférieurs 523. Ce logement 603 est arrangé pour permettre le passage de la canalisation de transport 112a-b qui va se diviser dans chaque caniveau 202.

Pour assurer une ventilation du logement 603 de la boîte de dérivation 601, le plancher de séparation 605 est percé d'au moins un trou 607 fluidiquement connecté entre au moins l'une des conduites 905 et le logement 603.

Pour limiter la traînée en vol, la bouche d'aération 610 comporte une trappe 620 qui est montée mobile par rapport à la peau extérieure 630 entre une position fermée (Figs. 6 et 7) dans laquelle elle isole chaque fenêtre 604 de l'air extérieur (flèche 702) et est en continuité avec ladite peau extérieure 630 et une position ouverte (Fig. 8) dans laquelle elle s'escamote pour laisser libre le passage de l'air extérieur vers chaque fenêtre 604 (flèche 802).

Chaque fenêtre 604 est arrangée dans une cuvette 606 et la cuvette 606 est fermée par la trappe 620 ou ouverte lorsque la trappe 620 s'ouvre.

Le déplacement de la trappe 620 est assuré par un système de déplacement 704 qui est commandé par l'unité de contrôle 50 et arrangé pour déplacer la trappe 620 alternativement de la position ouverte à la position fermée.

Selon un mode de fonctionnement particulier, en fonctionnement normal, c'est-à-dire lorsqu'aucune fuite de dihydrogène n'est détectée par l'ensemble de détection et que l'aéronef 100 est au sol, l'unité de contrôle 50 commande le système de déplacement 704 de manière à placer la trappe 620 en position ouverte pour assurer un flux d'air homogène dans les caniveaux inférieurs 523 dont les portes 906 sont toutes en position ouverte.

Selon le même mode de fonctionnement particulier, lorsque l'ensemble de détection détecte une fuite de dihydrogène au niveau d'une canalisation de transport 112a-b et que l'aéronef 100 est au sol, il informe l'unité de contrôle 50 qui commande le système de déplacement 704 de manière à placer la trappe 620 en position ouverte pour assurer une entrée de l'air et le système de manœuvre 907 de chaque porte 906 correspondant à un caniveau inférieur 523 qui n'est pas concerné par la fuite de manière à ce que ladite porte 906 soit en position fermée, et commande le système de manœuvre 907 de chaque porte 906 correspondant à un caniveau inférieur 523 concerné par la fuite de manière à ce que ladite porte 906 soit en position ouverte pour maximiser l'aération dans ladite canalisation de transport 112a-b.

Selon le même mode de fonctionnement particulier, en fonctionnement normal, c'est-à-dire lorsqu'aucune fuite de dihydrogène n'est détectée par l'ensemble de détection et que l'aéronef 100 est en phase de vol, l'unité de contrôle 50 commande le système de déplacement 704 de manière à placer la trappe 620 en position fermée pour limiter la traînée et les portes 906 restent en position ouverte en cas de besoin.

Selon le même mode de fonctionnement particulier, lorsque l'ensemble de détection détecte une fuite de dihydrogène au niveau d'une canalisation de transport 112a-b et que l'aéronef 100 est en phase de vol, il informe l'unité de contrôle 50 qui commande le système de déplacement 704 de manière à placer la trappe 620 en position ouverte pour assurer une entrée de l'air et le système de manœuvre 907 de chaque porte 906 correspondant à un caniveau inférieur 523 qui n'est pas concerné par la fuite de manière à ce que ladite porte 906 soit en position fermée, et commande le système de manœuvre 907 de chaque porte 906 correspondant à un caniveau inférieur 523 concerné par la fuite de manière à ce que ladite porte 906 soit en position ouverte pour maximiser l'aération dans ladite canalisation de transport 112a-b.

Pour aider à l'écoulement de l'air dans les canalisations d'apport 614, en particulier lorsque l'aéronef 100 est au sol, des ventilateurs 650 sont implantés dans une ou plusieurs des canalisations d'apport 614 et ces ventilateurs 650 sont commandés par l'unité de contrôle 50 pour augmenter le débit d'air et ainsi résoudre plus rapidement les éventuels problèmes dus aux fuites.

De la même manière, pour éviter l'apparition de gel, l'air extérieur est chauffé grâce à des moyens de chauffage 652, comme par exemple une résistance chauffante, implantés dans une ou plusieurs des canalisations d'apport 614 et commandés par l'unité de contrôle 50.

Dans le mode de réalisation de l'invention présenté aux Figs. 7 et 8, par rapport à une structure de l'aéronef 100, la trappe 620 est montée mobile en rotation au niveau d'une partie avant autour d'un axe de charnière 706 qui est parallèle à la direction transversale Y.

En position fermée, la trappe 620 est relevée de manière à se positionner devant les fenêtres 604 et les obturer et en position ouverte, la trappe 620 est abaissée de manière à dégager les fenêtres 604.

Le système de déplacement 704 est ici arrangé sous la trappe 620 et comporte un socle 708 fixé à la structure de l'aéronef 100, un coulisseau 710 monté coulissant sur le socle 708, ici parallèlement à la direction longitudinale X, une biellette 712 dont une première extrémité est fixée de manière articulée au coulisseau 710 et dont une deuxième extrémité est fixée de manière articulée à la trappe 620 et un actionneur 714 commandé par l'unité de contrôle 50 et arrangé pour déplacer le coulisseau 710 le long du socle 708.

En fonction du sens de déplacement du coulisseau 710, le levier 712 va se lever ou s'abaisser entraînant en même temps la trappe 620.

L'actionneur 714 est par exemple un vérin.

Le guidage en translation du coulisseau 710 sur le socle 708 s'effectue grâce à des moyens connus comme par exemple une liaison glissière du type rainure et rail en T.

Pour éviter que l'air n'arrive plus au niveau des boîtes de dérivation 601 lorsque l'une des canalisations d'apport 614 est obturée, le réseau d'apport 612 est constitué de plusieurs canalisations d'apport 614 qui fusionnent et se séparent plusieurs fois pour créer différents chemins pouvant être empruntés par l'air.

De la même manière, il y a ici cinq fenêtres 604 pour éviter que si l'une d'elles est bouchée, l'air n'arrive pas aux boîtes de dérivation 601.

Selon un mode de réalisation particulier, l'unité de contrôle 50 comporte reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD (« Secure Digital » en anglais) ; au moins une interface de communication, permettant par exemple à l'unité de contrôle 50 de communiquer avec les capteurs et les moteurs.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ici.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Aéronef (100) comportant :
- au moins une canalisation de transport (112a-b) dans laquelle s'écoule du dihydrogène,
- pour chaque canalisation de transport (112a-b), un canal d'enfouissement (200a-b) **caractérisé en ce que** le canal d'enfouissement (200a-b) comporte un caniveau (202) qui comporte un fond (203), une ouverture à l'opposé du fond (203), et un plancher intermédiaire (520) ajouré entre le fond (203) et l'ouverture et séparant le caniveau (202) en un caniveau supérieur (521) dans lequel est fixée la canalisation de transport (112a-b) et un caniveau inférieur (523), l'aéronef comportant en outre:
- un système d'aération (600) comportant une bouche d'aération (610) arrangée pour capter de l'air extérieur à l'aéronef (100) et au moins une canalisation d'apport (614) où chacune débouche au niveau de ladite entrée d'air (602) par une fenêtre (604),
- des moyens de détection (52) répartis dans chaque canal d'enfouissement (200a-b) arrangés pour détecter la présence de dihydrogène,
- pour un ou plusieurs caniveaux inférieurs (523), une boîte de dérivation (601) comportant :
- pour le ou chacun desdits caniveaux inférieurs (523), une entrée (902) fluidiquement connectée à la canalisation d'apport (614) et une sortie (904) fluidiquement connectée audit caniveau inférieur (523), où l'entrée (902) et la sortie (904) sont fluidiquement connectées entre elles par une conduite (905), où l'entrée (902) est différente pour chaque caniveau inférieur (523),
- entre chaque entrée (902) et sortie (904) associées, une porte (906) mobile alternativement entre une position ouverte où l'air est libre de circuler entre l'entrée (902) et la sortie (904) et une position fermée dans laquelle l'air est bloqué entre l'entrée (902) et la sortie (904), et
- pour chaque porte (906), un système de manœuvre arrangé pour déplacer ladite porte (906) alternativement de la position ouverte à la position fermée, et
- une unité de contrôle (50) arrangée pour recevoir des informations des moyens de détection (52) et commander chaque système de manœuvre en fonction desdites informations.

2. Aéronef (100) selon la revendication 1, **caractérisé en ce que** chaque porte (906) est montée mobile en rotation autour d'un arbre vertical central par rapport à la porte (906) et par rapport à l'entrée (902), **en ce que** le système de manœuvre est un moteur électrique (907) dont l'arbre moteur est arrangé pour entraîner en rotation l'arbre de la porte (906).

3. Aéronef (100) selon l'une des revendications 1 ou 2, **caractérisé en ce que** la boîte de dérivation (601) présente un logement (603) séparé des conduites (905) par un plancher de séparation (605), **en ce que** le logement (603) est en communication fluidique avec les caniveaux supérieurs (521) des caniveaux (202) connectés à ladite boîte de dérivation (601) et **en ce que** le plancher de séparation (605) est percé d'au moins un trou (607) fluidiquement connecté entre au moins l'une des conduites (905) et le logement (603).

4. Aéronef (100) selon l'une des revendications 1 ou 2, **caractérisé en ce que** la bouche d'aération (610) comporte une trappe (620) qui est montée mobile entre une position fermée dans laquelle elle isole chaque fenêtre (604) de l'air extérieur et une position ouverte dans laquelle elle s'escamote pour laisser libre le passage de l'air extérieur vers chaque fenêtre (604), et **en ce que** ledit aéronef (100) comporte un système de déplacement (704) commandé par l'unité de contrôle (50) et arrangé pour déplacer la trappe (620) alternativement de la position ouverte à la position fermée.

5. Aéronef (100) selon la revendication 4, **caractérisé en ce que** la trappe (620) est montée mobile en rotation au niveau d'une partie avant, **en ce que** le système de déplacement (704) comporte un socle (708), un coulisseau (710) monté coulissant sur le socle (708), une biellette (712) dont une première extrémité est fixée de manière articulée au coulisseau (710) et dont une deuxième extrémité est fixée de manière articulée à la trappe (620) et un actionneur (714) commandé par l'unité de contrôle (50) et arrangé pour déplacer le coulisseau (710) le long du socle (708).

6. Aéronef (100) selon l'une des revendications 1 à 5, **caractérisé en ce que** des ventilateurs (650) commandés par l'unité de contrôle (50) sont implantés dans une ou plusieurs des canalisations d'apport (614).

7. Aéronef (100) selon l'une des revendications 1 à 6, **caractérisé en ce que** des moyens de chauffage (652) commandés par l'unité de contrôle (50) sont implantés dans une ou plusieurs des canalisations d'apport (614).

## Patentansprüche

1. Flugzeug (100), umfassend:
- mindestens eine Transportleitung (112a-b), in der Diwasserstoff fließt,
- für jede Transportleitung (112a-b) einen Verlegekanal (200a-b), **dadurch gekennzeichnet, dass** der Verlegekanal (200a-b) eine Rinne (202) umfasst, die einen Boden (203), eine Öffnung gegenüber dem Boden (203) und einen durchbrochenen Zwischenboden (520) zwischen dem Boden (203) und der Öffnung, der die Rinne (202) in eine obere Rinne (521), in der die Transportleitung (112a-b) befestigt ist, und eine untere Rinne (523) teilt, umfasst, wobei das Flugzeug ferner umfasst:
- ein Lüftungssystem (600), das eine Lüftungsöffnung (610) umfasst, die dazu ausgestaltet ist, Luft außerhalb des Flugzeugs (100) aufzunehmen, und mindestens eine Zuführleitung (614), wobei jede an dem Lufteinlass (602) durch ein Fenster (604) mündet,
- Detektionsmittel (52), die in jedem Verlegekanal (200a-b) verteilt sind und dazu ausgestaltet sind, das Vorhandensein von Diwasserstoff zu detektieren,
- für eine oder mehrere untere Rinnen (523) ein Abzweigungsgehäuse (601), umfassend:
- für die oder jede der unteren Rinnen (523) einen Einlass (902), der fluidisch mit der Zuführleitung (614) verbunden ist, und einen Auslass (904), der fluidisch mit der unteren Rinne (523) verbunden ist, wobei der Einlass (902) und der Auslass (904) fluidisch untereinander durch eine Rohrleitung (905) verbunden sind, wobei der Einlass (902) für jede untere Rinne (523) verschieden ist,
- zwischen jedem Einlass (902) und Auslass (904), die zugeordnet sind, eine Klappe (906), die alternierend zwischen einer geöffneten Stellung, in der die Luft frei zwischen dem Einlass (902) und dem Auslass (904) zirkulieren kann, und einer geschlossenen Stellung, in der die Luft zwischen dem Einlass (902) und dem Auslass (904) blockiert wird, beweglich ist, und
- für jede Klappe (906) ein Betätigungssystem, das dazu ausgestaltet ist, die Klappe (906) alternierend aus der geöffneten Stellung in die geschlossene Stellung zu verlagern, und
- eine Steuerungseinheit (50), die dazu ausgestaltet ist, Informationen von den Detektionsmitteln (52) zu empfangen und jedes Betätigungssystem in Abhängigkeit von den Informationen zu steuern.

2. Flugzeug (100) nach Anspruch 1, **dadurch gekennzeichnet, dass** jede Klappe (906) drehbeweglich um eine in Bezug auf die Klappe (906) und in Bezug auf den Einlass (902) zentrale vertikale Welle gelagert ist, dass das Betätigungssystem ein Elektromotor (907) ist, dessen Antriebswelle dazu ausgestaltet ist, die Welle der Klappe (906) drehanzutreiben.

3. Flugzeug (100) nach einem der Ansprüche 1 oder 2, **dadurch gekennzeichnet, dass** das Abzweigungsgehäuse (601) eine Aufnahme (603) aufweist, die von den Rohrleitungen (905) durch einen Trennboden (605) getrennt ist, dass die Aufnahme (603) in Fluidverbindung mit den oberen Rinnen (521) der Rinnen (202) steht, die mit dem Abzweigungsgehäuse (601) verbunden sind, und dass der Trennboden (605) mit mindestens einem Loch (607) durchbohrt ist, das zwischen mindestens einer der Rohrleitungen (905) und der Aufnahme (603) fluidisch verbunden ist.

4. Flugzeug (100) nach einem der Ansprüche 1 oder 2, **dadurch gekennzeichnet, dass** die Lüftungsöffnung (610) einen Verschluss (620) umfasst, der zwischen einer geschlossenen Stellung, in der er jedes Fenster (604) von der Außenluft absperrt, und einer geöffneten Stellung, in der er eingezogen ist, um den Durchlass der Außenluft zu jedem Fenster (604) frei zu lassen, beweglich gelagert ist, und dadurch, dass das Flugzeug (100) ein Verlagerungssystem (704) umfasst, das von der Steuerungseinheit (50) gesteuert wird und dazu ausgestaltet ist, den Verschluss (620) alternierend aus der geöffneten Stellung in die geschlossene Stellung zu verlagern.

5. Flugzeug (100) nach Anspruch 4, **dadurch gekennzeichnet, dass** der Verschluss (620) drehbeweglich an einem vorderen Teil gelagert ist, dass das Verlagerungssystem (704) einen Sockel (708), einen an dem Sockel (708) verschieblich gelagerten Schieber, eine Stange (712), deren erstes Ende gelenkig an dem Schieber (710) befestigt ist und deren zweites Ende gelenkig an dem Verschluss (620) befestigt ist, und einen Aktor (714), der von der Steuerungseinheit (50) gesteuert wird und dazu ausgestaltet ist, den Schieber (710) entlang des Sockels (708) zu verlagern, umfasst.

6. Flugzeug (100) nach einem der Ansprüche 1 bis 5, **dadurch gekennzeichnet, dass** Ventilatoren (650), die von der Steuerungseinheit (50) gesteuert werden, in eine oder mehrere der Zuführleitungen (614) eingebaut sind.

7. Flugzeug (100) nach einem der Ansprüche 1 bis 6, **dadurch gekennzeichnet, dass** Heizmittel (652), die von der Steuerungseinheit (50) gesteuert werden, in eine oder mehrere der Zuführleitungen (614) eingebaut sind.

## Claims

1. Aircraft (100) having:
- at least one transport pipe (112a-b) in which dihydrogen flows,
- for each transport pipe (112a-b), an embedding channel (200a-b)
**Characterized in that** the embedding channel (200a-b) has a gutter (202) that has a bottom (203), an opening opposite the bottom (203), and a perforated intermediate floor (520) between the bottom (203) and the opening that separates the gutter (202) into an upper gutter (521) in which the transport pipe (112a-b) is fastened and a lower gutter (523),
the aircraft having also:
- an aeration system (600) having an aeration aperture (610) arranged to collect air outside the aircraft (100) and at least one supply pipe (614) wherein each one opens at said air inlet (602) via a window (604),
- detection means (52) distributed in each embedding channel (200a-b) and arranged to detect the presence of dihydrogen,
- for one or more lower gutters (523), a bypass box (601) having:
- for the or each of said lower gutters (523), an inlet (902) fluidically connected to the supply pipe (614) and an outlet (904) fluidically connected to said lower gutter (523), wherein the inlet (902) and the outlet (904) are fluidically connected to one another by a duct (905), wherein the inlet (902) is different for each lower gutter (523),
- between each associated inlet (902) and outlet (904), a door (906) able to move alternately between an open position in which the air is free to circulate between the inlet (902) and the outlet (904) and a closed position in which the air is blocked between the inlet (902) and the outlet (904), and
- for each door (906), a manoeuvring system arranged to move said door (906) alternately from the open position to the closed position, and
- a control unit (50) arranged to receive information from the detection means (52) and control each manoeuvring system on the basis of said information.

2. Aircraft (100) according to Claim 1, **characterized in that** each door (906) is mounted so as to be able to move in rotation about a vertical shaft that is central with respect to the door (906) and with respect to the inlet (902), and wherein the manoeuvring system is an electric motor (907) of which the drive shaft is arranged to drive the shaft of the door (906) in rotation.

3. Aircraft (100) according to either of Claims 1 and 2, **characterized in that** the bypass box (601) has a recess (603) separated from the ducts (905) by a separation floor (605), **in that** the recess (603) is in fluidic communication with the upper gutters (521) of the gutters (202) connected to said bypass box (601) and **in that** the separation floor (605) has passing through it at least one hole (607) fluidically connected between at least one of the ducts (905) and the recess (603).

4. Aircraft (100) according to either of Claims 1 and 2, **characterized in that** the aeration aperture (610) has a flap (620) that is mounted so as to be able to move between a closed position in which it isolates each window (604) from the external air and an open position in which it is stowed so as to allow the external air to pass freely towards each window (604), and **in that** said aircraft (100) has a movement system (704) controlled by the control unit (50) and arranged to move the flap (620) alternately from the open position to the closed position.

5. Aircraft (100) according to Claim 4, **characterized in that** the flap (620) is mounted so as to be able to move in rotation at a front part, and **in that** the movement system (704) has a plinth (708), a slider (710) mounted so as to be able to slide on the plinth (708), a connecting rod (712) of which a first end is fastened in an articulated manner to the slider (710) and of which a second end is fastened in an articulated manner to the flap (620), and an actuator (714) controlled by the control unit (50) and arranged to move the slider (710) along the plinth (708).

6. Aircraft (100) according to one of Claims 1 to 5, **characterized in that** fans (650) controlled by the control unit (50) are installed in one or more of the supply pipes (614).

7. Aircraft (100) according to one of Claims 1 to 6, **characterized in that** heating means (652) controlled by the control unit (50) are installed in one or more of the supply pipes (614).
